# EUROPEAN PATENT SPECIFICATION

(11) **EP 0 754 633 B1**
(45) Date of publication and mention of the grant of the patent: **01.09.1999**
(21) Application number: 96304783.2
(22) Date of filing: 28.06.1996
(51) Int. Cl.: B65D 83/00, B65D 81/32, B05C 17/005

(54) **Reusable multi-compartment cartrige system**
Wiederverwertbares Mehrkammerkartuschensystem
Réutilisable système de cartouche à compartiments multiples

(30) Priority: 19.07.1995 GB 9514808
(43) Date of publication of application: 22.01.1997
(60) Divisional application: 97301304.8
(73) Proprietor: Exchem plc, London WC1A 1NU (GB)
(72) Inventor: Ewings, Paul Francis Reginald, Ripley, Derbys DE5 3JP (GB); Ball, Malcolm David, Lichfield, Staffs WS14 9SR (GB)
(74) Representative: Pacitti, Pierpaolo A.M.E.

(56) References cited:
- EP-A- 0 541 972
- WO-A-95/05984
- DE-U- 9 206 256
- US-A- 3 323 682

## Description

This invention relates to cartridge systems used in dispensing devices suitable for dispensing interreactive multi-component compositions. Many such compositions exist and will be well known to people skilled in the art; the compositions comprising reactive components that may be produced as a liquid or paste including, and by way of example only, polyester, vinyl ester, epoxide, polyurethane and so on.

Cartridges containing multi-component compositions are known in various forms. Three examples of such cartridges are shown in United States Patent No. US-A-3 323 682, European Patent No. EP-A-0 541 972, and International Patent No. WO-A-95/05984. Generally such cartridges comprise two or more separate compartments, each housing a respective component. These components, in use, are extruded or otherwise expelled through an orifice in their respective compartments into a static mixing device, where they are caused to mix together.

In the past it has been common to use moulded cartridges having concentric or side-by-side compartments. These have various limitations. For example, tooling costs dictate that moulded cartridges are available only in standard sizes, with generally integral mixing ratios. Thus, in the case of an optimum mixing ratio being non-standard, moulded cartridges are not entirely satisfactory.

Also, as such moulded cartridges are supplied in a range of sizes, no one gun or dispensing apparatus can be used - rather respective dispensing guns are needed for each size of cartridge. This problem is exacerbated by the fact that with some cartridge, the gun's piston has direct contact with the mixing components and is therefore required to be made of a material which is compatible with the particular components being used. This leads to inconvenience and additional expense.

Other known cartridges are collapsible, having for example accordion pleats or being otherwise frangible, such that upon the application of axial pressure from a piston or the like they reduce in volume and expel their content appropriately. Such cartridges are usually of only the single component type and are contained within a more rigid structure; this also serving to provide a guide means to a piston. The outer rigid structure may also provide a compartment for containing a second component, as taught for example in European Patent Application No 0,093,185A.

A disadvantage associated with this design, however, is that the internal wall of the rigid structure and the piston are exposed, in use, to contact with a component, which necessitates their cleaning after use, or at worst, requires them to be discarded. Also, as discussed before, this additionally necessitates the use of materials which are compatible with the components being mixed, reducing the versatility of the apparatus.

When designing dispensing devices for use with multi component systems consideration should be given to the need to minimise wastage. That is, it is desirable to design the dispensing device such that the majority of it may be reused and, similarly, only a minimal proportion of the device need be discarded when dispensing has been completed. In particular, it would be desirable only to discard the cartridge or housing member which houses the reactive components and possibly the nozzle or mixing head. Also, that which is discarded is preferably of only one material to assist in material recycling.

Accordingly, it is an object of the present invention to provide a dispensing device for inter-reactive multi component compositions which offers increased flexibility and versatility in its utility, while minimising disposal wastage.

According to the present invention there is provided a dispensing device for an inter-reactive multi-component composition comprising a frangible cartridge comprising a flexible membrane having a bag-like formation, the cartridge being located substantially within a guide tube and having its dispensing end passed internally through a nozzle attached to a respective end of the guide tube and its opposite end exposed to a compression means for encouraging the components towards the nozzle, in use, said dispensing end being closed by a closure, such as a metal ring or tag, characterised in that the frangible cartridge is a multi-compartment cartridge, each compartment containing a respective component but not being filled to capacity with said component, the closure being adapted to pass through the nozzle, the dispensing device further comprising a retaining clip attached to the portion of the dispensing end passed through the nozzle between the nozzle and the closure, the retaining clip being adapted to prevent the dispensing end from returning through the nozzle.

Preferably, the guide tube provides rigid support to the cartridge, in use, and provides axial guidance to the compression means, which may be a piston.

Preferably, the nozzle is provided with an externally threaded portion to facilitate attachment of a static mixer.

Preferably, the clip is formed by an integral moulding having two portions movable about a hinge portion to enclose the dispensing end of the cartridge.

Embodiments of the invention will now be described, by way of example only, in order to give the reader a better understanding of the invention, with reference to the accompanying drawings, in which:
Fig. 1 is a cross section of part of a dispensing device incorporating the novel cartridge and associated apparatus;
Figs. 2a and 2b are front and plan views, respectively, of a modified clip for use in the embodiment of Fig. 1;
Figs. 3a and 3b are front and plan views, respectively, of a modified form of the clip of Fig. 2 in partially assembled form; and
Fig. 3c is a view corresponding to Fig. 3b but showing an additional component.

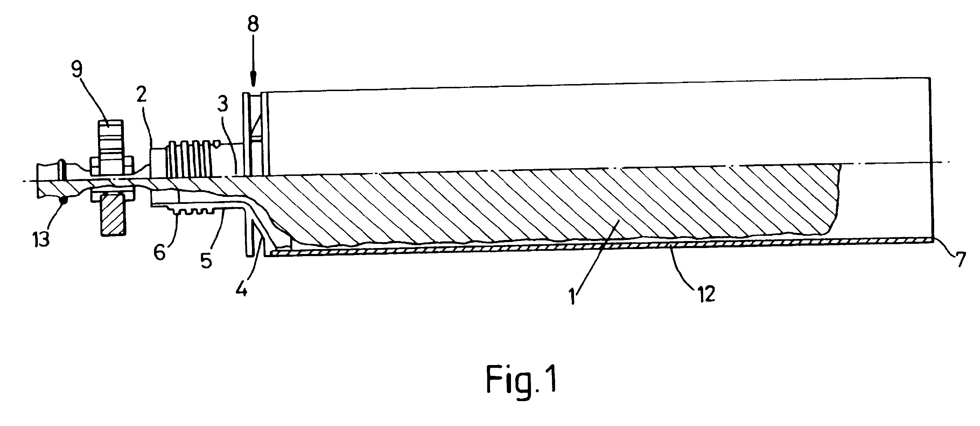

Referring to Fig. 1, a frangible cartridge 1 includes two or more compartments, each containing a respective component. The cartridge 1 is made from a flexible pliable material compatible with the components to be housed, and having some resemblance to a bag or skin. Advantageously, a single polymer or other material can be used. The cartridge is filled through an open end which is then closed with a metal ring staple or tag 13.

Each compartment within the cartridge 1 contains a respective component, but is not filled with such a component to its capacity. In other words, the full potential volume of each compartment within the cartridge 1 is not used to contain its respective component, such that there is some slack or vacant occupancy within the compartments.

The dispensing device is in the form of a caulking gun, and comprises a nozzle adaptor 2 which includes a central internal bore 3, a shoulder portion 4 and a neck 5. The exterior of the neck 5 is provided with a male threaded area 6, which is adapted to engage with internal threads provided on commercially available static mixers.

The dispensing device also includes a guide tube 12 which, in the embodiment shown, is in the form of rigid aluminium tube. The guide tube 12 can also be manufactured in any suitable material, including a plastics or metal tube, using well known techniques such as injection or blow moulding, extrusion or machining.

The tube 12 is open at both ends. One end 7 is adapted to receive a piston (not shown) slidable within the tube 12, the other end 8 being adapted to engage with the shoulder 4 of the nozzle adaptor 2.

Assembling the dispensing device is performed in the following manner.

Firstly, one end of the frangible cartridge 1 is drawn through the bore 3 within the nozzle adapter 2. As the cartridge 1 is not filled with the mixing components to its capacity, it is not difficult to simply pull the material of the cartridge 1 through the bore 3 without applying undesirable pressure to the cartridge, which might lead to a tear or rupture thereof. After the end of the cartridge 1 is threaded through the bore 3 in the adaptor 2, it is retained in such a position with the use of a retaining clip or disc 9. The clip 9 also can be made of any suitable material, including metal or plastics, and either be moulded, machined or stamped. The function of the clip 9 is to prevent the threaded (inserted) portion of the cartridge from returning through the bore 3 in the adaptor 2.

The cartridge 1 and adaptor 2 may be supplied commercially in this form, and as such, may be fitted to a standard caulking gun; the piston of the gun being suitably sized and positioned within the guide tube 12. The user then would hold the clip 9, applying sufficient tension to pull the dispensing end of the cartridge 1 slightly away from the nozzle adaptor 2, to allow it to be cut through with a knife or other implement. A static mixer (not shown) is then attached to the nozzle adaptor 2, ready to receive the components from the cut dispensing end of the cartridge 1 as pressure is applied by the piston (also not shown).

Various types of dispensing guns may be used, including even those which facilitate a reversible or shuttle-type piston action.

Once the piston has forced substantially all of the mixing components from the cartridge 1, the cartridge 1, adaptor 2 and static mixer can be discarded, while the rest of the apparatus may be reused; either for a cartridge with similar or dissimilar components or ratios.

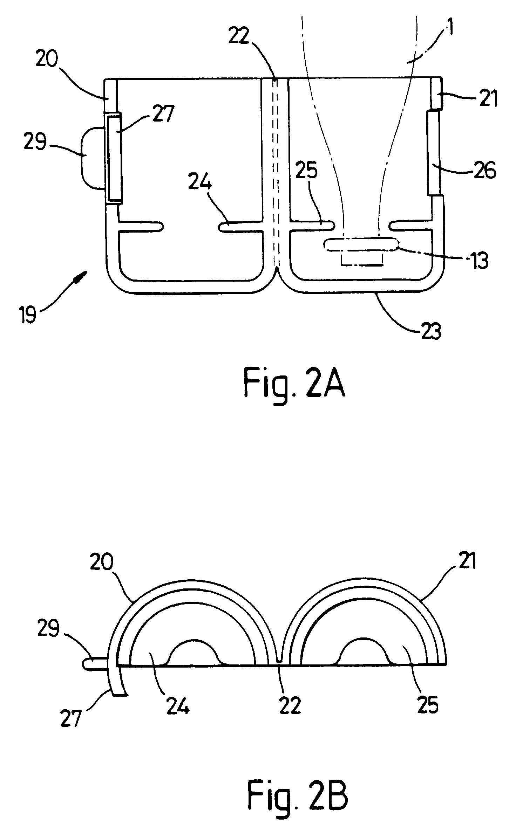

Fig. 2 illustrates a form of clip which may be used instead of the clip 9 of Fig. 1. In Fig. 2, a clip 19 is formed as a one-piece plastic moulding and comprises two generally semi-cylindrical sections 20 and 21 joined together axially by an integral hinge portion 22 such that the portions 20 and 21 may be pivoted together to form a cylindrical cap member having a bottom wall 23. The cap portions 20 and 21 include integral transverse portions 24 and 25 which close together to form a circular hole. The clip 19 further includes a snap-action latch formed by portions 26 and 27, and a lug portion 29 for engagement by the user's finger.

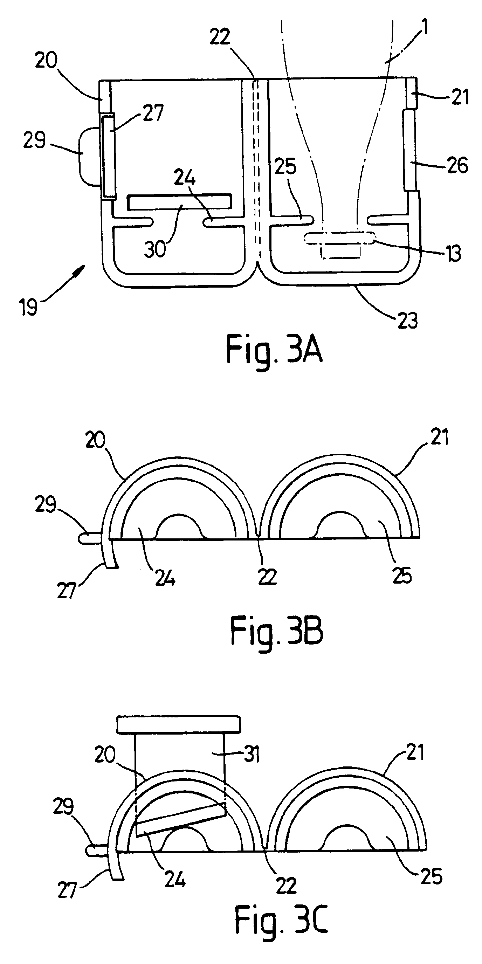

In use, after the end of the cartridge 1 has been threaded through the bore 3, the clip 19 in its open condition is offered up so that the metal ring staple 13 is engaged behind the transverse portion, as shown in phantom in Fig. 3a, and the clip 19 is then closed by a hinging action and snapped shut. In this condition the clip 19 acts as a cover during storage and transportation, and is operated by the user as described above.

Fig. 3 shows a generally similar clip 19 which is modified by the provision of a slot 30 in the first portion 20. As seen in Fig. 3c, a disposable blade 31 is frictionally engaged in the slot 30 before the clip 19 is fitted to the cartridge 1. In use, the user simply depresses the blade 30 to severe the neck of the cartridge 1, and the clip 19 can then be removed and disposed of.

The invention thus provides a cartridge system in which the main structural tubular member may be reused repeatedly without requiring cleaning, and in which the amount of packaging material requiring disposal is substantially reduced. The system of the present invention also facilitates the use of a variety of sizes of cartridge within a common tube and caulking gun.

## Claims

1. A dispensing device for an inter-reactive multi-component composition comprising a frangible cartridge (1) comprising a flexible membrane having a bag-like formation, the cartridge being located substantially within a guide tube (12) and having its dispensing end passed internally through a nozzle (2) attached to a respective end of the guide tube (12) and its opposite end exposed to a compression means for encouraging the components towards the nozzle, in use, said dispensing end being closed by a closure (13), such as a metal ring or tag,
characterised in that the frangible cartridge (1) is a multi-compartment cartridge, each compartment containing a respective component but not being filled to capacity with said component,
the closure (13) being adapted to pass through the nozzle (2),
the dispensing device further comprising a retaining clip (9, 19) attached to the portion of the dispensing end passed through the nozzle (2) between the nozzle (2) and the closure (13), the retaining clip (9, 19) being adapted to prevent the dispensing end from returning through the nozzle (2).

2. A device according to claim 1, in which the guide tube (12) provides rigid support to the cartridge, in use, and provides axial guidance to the compression means.

3. A device according to claim 1 or claim 2, in which the compression means is a piston.

4. A device according to any preceding claim, in which the nozzle (2) is provided with an externally threaded portion (6) to facilitate attachment of a static mixer.

5. A device according to any preceding claim, in which the clip (9, 19) is formed by an integral moulding having two portions (20, 21) movable about a hinge portion (22) to enclose the dispensing end of the cartridge.

## Patentansprüche

1. Eine Spendervorrichtung für eine interreaktive, aus vielen Komponenten bestehende Zusammensetzung, bestehend aus einer zerbrechlichen Kartusche (1), welche ihrerseits aus einer biegsamen, sackartig gebildeten Membran besteht, wobei sich die Kartusche im wesentlichen innerhalb einer Leitröhre (12) befindet und ihr Spenderende intern durch eine Düse (2) geht, welche jeweils an einem Ende der Leitröhre (12) befestigt ist und das entgegengesetzte Ende einem Komprimierungsmittel ausgesetzt ist, um die Komponenten zur Düse hinzuleiten, wobei das besagte Spenderende, wenn es in Betrieb ist, durch einen Verschluß (13), wie z.B. durch einen Metallring oder durch eine Metalletikette, verriegelt wird,
dadurch gekennzeichnet, daß die zerbrechliche Kartusche (1) eine Mehrkammerkartusche ist, wobei jeweils jede der Kammern eine Komponente enthält, jedoch durch die besagte Komponente nicht voll aufgefüllt wird, wobei der Verschluß (13) so ausgerichtet ist, daß er die Düse (2) passieren kann,
wobei die Spendervorrichtung weiter aus einer Klammer (9, 19) besteht, die am Teil des Spenderteils, der durch die Düse (2) zwischen der Düse (2) und dem Verschluß (13) hindurchgeht, befestigt ist, wobei die Klammer (9, 19) so ausgerichtet ist, daß sie das Spenderende davon abhält, durch die Düse (2) zurück zu gehen.

2. Vorrichtung gemäß Anspruch 1, wobei die Leitröhre (12) der Kartusche eine steife Stütze verleiht, wenn sie in Betrieb ist, und dem Komprimierungsmittel axiale Führung bereitstellt.

3. Vorrichtung gemäß Anspruch 1 oder Anspruch 2, wobei das Komprimierungsmittel ein Kolben ist.

4. Vorrichtung gemäß einem der vorhergehenden Ansprüche, wobei die Düse (2) zusammen mit einem Teil mit Außengewinde (6) bereitgestellt wird, um die Befestigung eines statischen Mischers zu erleichtern.

5. Vorrichtung gemäß einem der vorhergehenden Ansprüche, wobei die Klammer (9, 19) durch einen integralen Guß gebildet wird, der zwei Teile (20, 21) aufweist, die um einen Gelenkteil (22) herum bewegbar sind, um das Spenderende der Kartusche zu umgeben.

## Revendications

1. Un dispositif de distribution pour une composition à composants multiples inter-réactifs comprenant une cartouche cassable (1) comprenant une membrane flexible formée comme un sac, la cartouche étant située sensiblement à l'intérieur d'un tube de guidage (12) et dont l'extrémité de distribution passe de façon interne à travers un ajutage (2) fixé à une extrémité respective du tube de guidage (12) et dont l'extrémité opposée est soumise à un moyen de compression pour pousser les composants vers l'ajutage, à l'usage, ladite extrémité de distribution étant fermée par un bouchon (13), tel qu'une bague ou une broche en métal,
caractérisé en ce que la cartouche cassable (1) est une cartouche à compartiments multiples, chaque compartiment contenant un composant respectif, ledit composant ne le remplissant pas entièrement,
le bouchon (13) étant adapté pour passer à travers l'ajutage (2),
le dispositif de distribution comprenant de plus un clip de retenue (9, 19) fixé à la partie de l'extrémité de distribution qui est passée à travers l'ajutage (2) entre l'ajutage (2) et le bouchon (13), le clip de retenue (9, 19) étant adapté pour empêcher l'extrémité de distribution de se rétracter à travers l'ajutage (2).

2. Un dispositif selon la revendication 1, dans lequel le tube de guidage (12) fournit un support rigide à la cartouche, à l'usage, et fournit un guidage axial au moyen de compression.

3. Un dispositif selon la revendication 1 ou la revendication 2, dans lequel le moyen de compression est un piston.

4. Un dispositif selon une quelconque des revendications précédentes, dans lequel l'ajutage (2) est muni d'une partie filetée (6) facilitant le raccordement à un mélangeur statique.

5. Un dispositif selon une quelconque des revendications précédentes, dans lequel le clip (9, 19) est formé par un moulage intégral possédant deux parties (20, 21) pouvant bouger autour d'un partie charnière (22) afin d'enfermer l'extrémité de distribution de la cartouche.
